# EUROPÄISCHE PATENTANMELDUNG

(11) **EP 4 458 131 A1**
(43) Veröffentlichungstag der Anmeldung: **06.11.2024**
(21) Anmeldenummer: 24172277.6
(22) Anmeldetag: 24.04.2024
(51) Int. Cl.: A01F 17/02, A01F 15/10, A01D 61/00

(54) **LANDWIRTSCHAFTLICHE PRESSE, INSBESONDERE RUNDBALLENPRESSE**

(30) Priorität: 26.04.2023 DE 102023110791
(71) Anmelder: Rubenbauer, Georg, 95695 Mähring (DE)
(72) Erfinder: Rubenbauer, Georg, 95695 Mähring (DE)
(74) Vertreter: Benninger, Johannes

(57) **Zusammenfassung**

Die Erfindung betrifft eine mobile landwirtschaftliche Presse (10) oder Halmgutpresse zum Pressen von insbesondere zylindrischen Ballen (20) oder Rundballen. Die Presse umfasst eine Aufnahmeeinrichtung (30) zum Aufnehmen von Erntegut (14), ein der Aufnahmeeinrichtung in Förderrichtung nachgeordnetes Schneidmodul (16) mit einer rotierenden Messerwalze (38) und mit dieser in Eingriff stehenden Schneidmessern (48) und eine dem Schneidmodul in Förderrichtung des Ernteguts nachgeordnete Press- und/oder Wickelvorrichtung (42). Der Messerwalze kann eine Querfördereinrichtung (44) zugeordnet werden, indem Teile des Schneidmoduls (16) aus der Presse entnehmbar und durch besagte Querfördereinrichtung (44) ersetzbar sind. Dies ermöglicht die einfache Umrüstung einer mobilen landwirtschaftlichen Presse in eine universal einsetzbare stationäre Presse für Halmgut oder Pressgut aller Art.

## Beschreibung

Die vorliegende Erfindung betrifft eine landwirtschaftliche Presse mit einer entnehmbaren Messerkassette eines Schneidmoduls, insbesondere zum Pressen von Rundballen. Die Erfindung betrifft zudem ein Verfahren zur Handhabung einer solchen landwirtschaftlichen Presse mit zumindest teilweise entnehmbarem Schneidmodul.

In der landwirtschaftlichen Pflanzen- und Tierfutterproduktion fällt bei vielen Erntevorgängen verwertbares Halmgut an, so etwa Getreidestroh, Maisstroh oder Heu. Solches Halmgut bildet in den seltensten Fällen einen Abfallstoff, auch wenn es sich in manchen Verfahrensvarianten als sinnvoll erwiesen hat, das Getreidestroh als organisches Mulchmaterial auf dem Feld zu belassen und dort ggf. mittels geeigneter Werkzeuge in den Boden einzuarbeiten. Dies betrifft etwa den Bereich der nicht wendenden oder sog. pfluglosen Bodenbearbeitung. Darüber hinaus kann vom Feld eingesammeltes Getreidestroh als vergärbare Beladung von Biogasanlagen und damit zur Energiegewinnung eingesetzt werden.

Normalerweise jedoch stellt das Halmgut einen Rohstoff dar, der in vielen landwirtschaftlichen Prozessketten benötigt wird. So kann Getreidestroh, das im Zusammenhang mit dem Mähdrusch abfällt, als Einstreu für Stalltiere benötigt werden, so etwa bei der Rinderhaltung, während Heu ein wertvolles Tierfutter für Weidetiere bilden kann, die als landwirtschaftliches Großvieh oftmals nicht auf die Weide gelangen, sondern im Stall gefüttert werden. Auch als Winterfutter für saisonal in Winterställen untergebrachtes Weidevieh wird getrocknetes Heu benötigt.

Da in herkömmlichen Prozessen der Heugewinnung das frisch gemähte Gras auf dem Feld getrocknet und anschließend mittels Ladewagen oder auf andere Weise geborgen wird, hat sich herausgestellt, dass auf diese Weise sehr große Transport- und Lagervolumina benötigt werden. Diese erheblichen Transport- und Lagervolumina für das geborgene Heu könnten durch Pressen des Heus deutlich reduziert werden. Durch einen solchen Pressvorgang, der sinnvollerweise bereits auf dem Feld stattfindet, wird das luft- und sonnengetrocknete Heu oder Stroh zu einem Stückgut umgearbeitet, das durch einen solchen Verarbeitungs- und Umformungsvorgang deutlich leichter maschinell handhabbar und stapelbar gemacht wird und insbesondere in fördertechnischer und logistischer Hinsicht besser verarbeitet und gehandhabt werden kann.

Für die Handhabung der solchermaßen aus geerntetem Halmgut gebildeten Pressportionen oder Stückgüter werden im einfachsten Fall landwirtschaftliche Zugmaschinen mit frontseitig angebauten hydraulischen Hebevorrichtungen eingesetzt. Daneben haben sich sog. Hoflader bewährt und vielerorts durchgesetzt, die dann zum Einsatz kommen, wenn eine ausreichende Auslastung auf dem Feld und am Hof gegeben ist, d.h. wenn zahlreiche Einsatzmöglichkeiten zum Heben, Umsetzen, Stapeln und allgemein zum Handhaben von Heu- oder Strohballen vorhanden sind.

In der Frühphase der maschinellen Entwicklung wurden zum Pressen von Halmgut stationäre Pressvorrichtungen eingesetzt, was jedoch nicht den Nachteil beheben konnte, dass weiterhin große Volumina an geerntetem Halmgut vom Feld zur Pressvorrichtung zu befördern waren. Aus diesem Grund wurden mobile Pressen entwickelt, die zunächst als angehängte und zapfwellenbetriebene Maschinen von landwirtschaftlichen Zugmaschinen auf das Feld gezogen wurden, um dort das getrocknete und normalerweise in Schwaden abgelegte Halmgut aufzunehmen und zu gepressten Einheiten zu verarbeiten. Diese Maschinentypen sind etwa als Niederdruck- oder als Mitteldruck-Aufsammelpressen bekannt und gebräuchlich geworden.

Nachdem sich zur Mitte des vergangenen Jahrhunderts allmählich der Mähdrusch mit dem einphasigen Schneiden und Ausdreschen von Getreidefrüchten durchsetzen konnte, fiel bei diesen Verarbeitungsvorgängen immer mehr Stroh an, das aber mittels verfügbarer Pressvorrichtungen weitgehend uneingeschränkt verarbeitet werden konnte, was in der Folge zur Weiterentwicklung der bereits bekannten Niederdruck- und Mitteldruckpressen zu den sog. Hochdruck-Aufsammelpressen führte, die das Getreidestroh sehr stark verdichten und auf diese Weise hochverdichtete, aber dafür auch relativ schwere Strohballen bilden konnten.

Im Wesentlichen sind in heutiger Zeit zwei Varianten von gezogenen und zapfwellenbetriebenen Hochdrucksammelpressen gebräuchlich, die nach der Form der damit gebildeten Ballen unterschieden werden. Beide Varianten erlauben eine hocheffektive und sehr schnelle Arbeitserledigung auch bei großen zu befahrenden Flächen und den damit einhergehenden großen Volumina an getrocknetem und zu pressendem Halmgut.

Eine erste gebräuchliche Variante formt zylindrische Ballen, bei denen das in Schwaden auf dem Feld liegende Halmgut aufgenommen und in der Maschine um eine horizontale Längsmittelachse gewickelt sowie vor dem heckseitigen Auswerfen aus der Maschine mittels Sisalgarn oder einem anderen geeigneten Bindegarn zusammengebunden wird. Die solchermaßen geformten und gepressten Rundballen werden abschließend auf dem Feld abgelegt, indem jeder gepresste Ballen durch eine rückseitige Öffnung der Rundballenpresse ausgeworfen oder herausgerollt wird, um ohne weitere Behandlung oder Bearbeitung auf seiner zylindrischen Mantelfläche zum Liegen zu kommen. Die auf dem Feld abgelegten Ballen können anschließend in einem nachfolgenden Arbeitsgang mittels beweglicher Gabelzinken, die an einer landwirtschaftlichen Zugmaschine oder an einem Hoflader angeordnet sind, aufgenommen und direkt zum nahegelegenen Hof oder für einen längeren Transportweg zu einem Sammeltransporter wie einem offenen Anhänger gebracht und dort aufgeladen werden.

Eine ebenso verbreitete zweite Variante, die als Packenpresse oder Großpackenpresse bezeichnet wird, formt quaderförmige Ballen, die in einem kontinuierlichen Herstell-, Umform- und Förderprozess aus dem aufgenommenen Heu oder Stroh geformt und nach dem Binden über eine heckseitig an der angehängten und mittels der landwirtschaftlichen Zugmaschine gezogenen und mittels deren Zapfwelle angetriebenen Packenpresse angebrachten sog. Schurre ausgegeben und auf dem Feld abgelegt werden. Die weitere Handhabung, d.h. das Aufnehmen, Laden, Stapeln etc. z.B. auf einem Anhänger, kann dieselbe sein wie bei Rundballen, wobei jedoch zu bemerken ist, dass sich quaderförmige Ballen leichter und platzsparender Stapeln und in größeren Mengen bevorraten lassen als die mehr Raum benötigenden Rundballen.

Ein typischer Materialfluss, den das aufgenommene Halmgut durch eine Rundballen-, durch eine Packenpresse oder durch eine sog. Großpackenpresse nimmt, findet sich bspw. in der EP 2 289 305 B1 beschrieben. So weisen derartige Packen- oder Ballenpressen eine Aufnahmeeinheit, ein sog. Pick-Up auf, mit dem das auf dem Feld liegende Halmgut aufgenommen und in die Maschine überführt wird. Das aufgenommene Erntegut kann anschließend mittels Schneckenförderer von den Seiten zentral zur Mitte zusammengeführt werden, da nachgeordnete Schneidwerke und Presskanäle in aller Regel deutlich schmaler ausgeführt sind als der Aufnahme-Pick-Up sowie die Gesamtbreite der Presse. Während etwa eine Gesamtbreite einer solchen gezogenen Presse bei etwas mehr als zwei Metern liegen kann, beträgt das Breitenmaß der damit geformten Packen oder Ballen normalerweise nur wenig mehr als einen Meter.

Derartige Ballenpressen verfügen nicht zwingend über ein Schneidwerk, da die Halme hierbei relativ lang bleiben können, ohne dass dies den Wickelvorgang beeinträchtigt. Dagegen weisen Packenpressen normalerweise ein Schneidwerk mit einer Vielzahl an parallel geführten Schneidmessern auf, mit denen das aufgenommene Halmgut in kleinere Abschnitte zerteilt werden kann, sofern dies im Zusammenhang mit dem Pressvorgang und dem Prozess der Packenbildung gewünscht ist.

Sofern bei der landwirtschaftlichen Presse ein solches Schneidwerk vorhanden ist, befindet sich dieses typischerweise in Förderrichtung unmittelbar hinter der Schneckenzusammenführung. Das Schneidwerk, das mit einer rotierenden Zinkenwelle im schneidenden Eingriff steht, kann oberhalb oder unterhalb der rotierenden Zinkenwelle angeordnet sein, wobei die häufigere Bauart ein oberhalb der auch als Rotor bezeichneten rotierenden Zinkenwelle eingebautes Schneidwerk vorsieht.

Meist verfügen Ballen- oder Rundballenpressen über eine Vorpresseinrichtung, die in der Lage ist, die anfallende Masse des Erntegutes in kleineren Teilpaketen vorzuverdichten und die Teilpakete anschließend in die Hauptpresskammer zu übergeben. Auf diese Weise kann gewährleistet werden, dass die Hauptpresskammer nicht unmittelbar einen unverdichteten Gutstrom verarbeiten und pressen muss.

Der typische Materialfluss innerhalb einer Pressvorrichtung lässt sich der genannten Patentschrift EP 2 289 305 B1 oder auch anderen Patentdokumenten entnehmen. Neben den beschriebenen Details des Materialflusses befasst sich das genannte Patentdokument mit Aspekten der Reinigung, insbesondere der Bindeeinrichtung.

Darüber hinaus bedürfen zahlreiche weitere Verarbeitungsmodule in einer solchen Pressvorrichtung der regelmäßen Reinigung und Wartung. Ein solches Verarbeitungsmodul, das relativ häufig gewartet und für Wartungszwecke aus der Pressvorrichtung entnommen werden muss, ist die bereits erwähnte Schneidvorrichtung, die im vorliegenden Zusammenhang auch als Schneidmodul bezeichnet werden kann. Ein solches Schneidmodul kann bspw. eine Vielzahl von parallel angeordneten und ggf. verstellbaren oder in Gruppen verstellbaren Schneidmessern umfassen, die mit dem rotierenden Schneidwerk oder dem Rotor zusammenwirken und es auf diese Weise ermöglichen, das aufgenommene Halmgut in eine gewünschte Länge zu bringen.

Mit den beschriebenen Pressen stehen der landwirtschaftlichen Praxis technisch ausgereifte und in großer Zahl eingesetzte Maschinentypen zur Verfügung, um Halmgut unmittelbar auf dem Feld zu pressen und zu Stückgütern zu verarbeiten. Allerdings haben sich in der vielfältigen Praxis weitere Bedürfnisse nach einer Stückgutverarbeitung von verschiedenen Rohstoffen ergeben, so etwa nach einer Verarbeitung von als Futtermittel verwendeter Maissilage oder von Obstresten, die bspw. im Rahmen einer Kelterei oder Saftverarbeitung anfallen können.

Um solche organischen Rohstoffe zu pressen, werden in aller Regel stationäre Pressen eingesetzt, wie sie bereits aus der oben angeschnittenen Frühphase der maschinellen Entwicklung bekannt sind. Diese stationären Pressen haben den Vorteil einer großen Verarbeitungskapazität, was jedoch den gleichzeitigen Nachteil mit sich bringt, dass ein Einsatz bei kleineren Chargen, die zu verarbeiten und zu pressen sind, unwirtschaftlich wird, wenn der Transportaufwand und die Betriebs- und Unterhaltskosten für die ausschließlich stationär einzusetzenden Pressen berücksichtigt wird.

Aus diesem Grund sind manche Praktiken entstanden, die zwar als pragmatisch betrachtet werden können, die aber allenfalls provisorischen Charakter haben. So verwenden einige Landwirte ihre gezogenen Pressvorrichtungen in stationärer Weise, indem sie diese in ein Flachsilo hineinbewegen, um dort die Silage aufzunehmen. Da dabei die Silage mittels der Aufnahmevorrichtung ständig aufgenommen und somit allmählich abgetragen wird, muss die Presse auf dem Flachsilo entweder häufig umgesetzt oder die Silage mittels geeigneter Maschinen zur Aufnahmevorrichtung der Presse nachgefördert werden, damit nicht dort ein Trichter im aufzunehmenden Material entsteht, was schließlich dazu führen würde, dass kein weiteres Material mehr aufgenommen werden kann.

Aufgrund dieser praktischen Nachteile kann es als das vorrangige Ziel der vorliegenden Erfindung betrachtet werden, eine mobile, fahrbare oder gezogene landwirtschaftliche Presse oder Halmgutpresse für den stationären Betrieb verwendbar zu machen, so dass ein effektiver und kostengünstiger Einsatz einer kompakten fahrbaren Presse für den vorübergehenden oder dauerhaften stationären Betrieb ermöglicht wird.

Dieses Ziel der Erfindung wird mit den Gegenständen der unabhängigen Ansprüche erreicht. Merkmale vorteilhafter Weiterbildungen der Erfindung finden sich in den jeweiligen abhängigen Ansprüchen.

So schlägt die Erfindung zur Erreichung des genannten Ziels eine mobile landwirtschaftliche Presse oder Halmgutpresse zum Pressen von insbesondere zylindrisch gewickelten Ballen oder Rundballen mit den Merkmalen des unabhängigen Anspruchs vor. Diese erfindungsgemäße Presse oder Halmgutpresse umfasst zumindest eine Aufnahmeeinrichtung zum Aufnehmen von Erntegut oder Halmgut vom Boden, ein der Aufnahmeeinrichtung in Förderrichtung des Erntegutes oder Halmgutes nachgeordnetes Schneidmodul zum Fördern und/oder Zerkleinern des Erntegutes sowie eine dem Schneidmodul nachgeordnete Press- und/oder Wickeleinrichtung zum Pressen und/oder Wickeln des geförderten Gutes zu Ballen oder Rundballen definierter Größe.

Weiterhin kann wahlweise eine der Press- und/oder Wickeleinrichtung nachgeordnete Förder- und/oder Ablageeinrichtung zum Auswerfen fertig gepresster und/oder gewickelter und ggf. mit Garn umwickelter Ballen oder Rundballen vorgesehen sein. Allerdings kann die erfindungsgemäße Presse ggf. auch auf eine solche nachgeordnete Ablageeinrichtung verzichten, da fertig gewickelte Rundballen auch einfach ausgeworfen oder am Boden abgelegt werden können.

Das Schneidmodul umfasst zumindest eine rotierende Messerwalze, kann jedoch wahlweise weitere Funktionselemente enthalten, die nachfolgend näher erläutert werden. Allerdings ist in einer Minimalausstattung der erfindungsgemäßen Presse vorgesehen, dass das Schneidmodul zumindest die rotierende Messerwalze umfasst, die für die Zerkleinerung des geförderten Gutes sowie zu dessen Förderung zu nachgeordneten Verarbeitungsmodulen der Presse, insbesondere zur Wickel- und/oder Presseinrichtung sorgt.

Gemäß der vorliegenden Erfindung ist vorgesehen, dass dem Schneidmodul bzw. der Messerwalze des Schneidmoduls optional eine Querfördereinrichtung zur Zuförderung von Halmgut oder Pressgut zur Messerwalze zuordenbar ist. Damit ist insbesondere gemeint, dass die hier vorgeschlagene Presse in einem vom normalen Betriebsmodus zu unterscheidenden alternativen Betriebsmodus mit einer solchen Querfördereinrichtung ausgestattet werden kann oder ausgestattet ist, um solchermaßen die Einsatzmöglichkeiten der Presse zu erweitern und es zu ermöglichen, mittels der landwirtschaftlichen Presse nicht nur solches Halmgut zu verarbeiten, das mittels der Aufnahmeeinrichtung der über den Boden bewegten Presse von dort aufgenommen wird, sondern ihr mit Hilfe der Querfördereinrichtung anderes Halmgut, Pressgut o. dgl. zuzuführen, ohne dass hierzu die Presse über das vom Boden aufzunehmende Halmgut oder Pressgut bewegt werden muss.

Die ursprünglich als mobile landwirtschaftliche Presse ausgelegte Maschine kann durch Verwendung der dort zusätzlich angeordneten Querfördereinrichtung vielmehr in stationärer Betriebsweise genutzt werden und ganz unterschiedliches Gut verarbeiten, das in gleicher Weise verarbeitet und zu Ballen gepresst werden kann, wie das normalerweise verarbeitete und gepresste und/oder gewickelte Stroh oder Heu.

Das Schneidmodul kann wenigstens eine modular zusammengefasste Messerkassette mit einer Vielzahl von dort befestigten oder gelagerten Schneidmessern umfassen, mit denen die rotierenden Messerwalze in schneidendem Eingriff steht. Wahlweise können die Schneidmesser der Messerkassette in ihrer Lage verändert werden, wodurch sie mehr oder weniger tief zwischen die jeweils benachbarten Schneidscheiben der rotierenden Messerwalze eintauchen können, was wiederum die Länge der geförderten und teilweise zerkleinerten Halme des zu wickelnden und/oder zu pressenden Halmgutes beeinflusst.

Es hat sich in der Praxis als nachteilig erwiesen, dass diese Schneidmodule aufgrund ihres nicht unerheblichen Gewichts und ihrer Größe nur sehr mühsam manuell handhabbar und/oder aus der Maschine entnehmbar sind, weshalb es von Vorteil sein kann, eine Entnahme einer Messerkassette im Zusammenhang mit der Wartung oder Reinigung einer landwirtschaftlichen Halmgutpresse zu erleichtern, insbesondere durch einen motorischen Antrieb eines die Messerkassette seitlich aus der Maschine herausfahrenden Schlittens o. dgl., wobei dieser Vorgang darüber hinaus halbautomatisch oder vollautomatisch ausgestaltet werden kann.

Bei der mobilen landwirtschaftlichen Presse kann die modular zusammengefasste Messerkassette mit der Vielzahl an Schneidmessern aus der Halmgutpresse entnehmbar und durch die Querfördereinrichtung zur Zuförderung von Halmgut oder Pressgut zur Messerwalze ersetzbar ausgestaltet sein. Dieser Entnahmevorgang kann vorzugsweise durch einen geeigneten motorischen Antrieb unterstützt werden.

Nach dem und durch das Einsetzen der Querfördereinrichtung in den Förderbereich der Messerwalze kann somit eine stationäre Pressvorrichtung für unterschiedliches Pressgut gebildet werden, denn bei herausgenommener Messerkassette und dort eingesetzter Querfördereinrichtung ist die Halmgutpresse stationär betreibbar.

Die Messerwalze kann vorzugsweise unterhalb der Messerkassette und damit der dort einsetzbaren Querfördereinrichtung angeordnet sein, woraus sich ein Materialfluss ergeben kann, der sich besser befördern lässt. Hierbei ist die Messerkassette typischerweise schräg versetzt oberhalb der rotierenden Messerwalze angeordnet.

Die Querfördereinrichtung kann insbesondere ein Schneckenförderer sein; ein solcher Schneckenförderer reicht im Wesentlichen durch die gesamte Maschinenbreite und versorgt die als Längsförderer wirkende rotierende Messerkassette mit nahezu beliebigem Pressgut. Die Querfördereinrichtung kann wahlweise die Halmgutpresse mit außerhalb, insbesondere quer zu einer Längsrichtung befindlichem Pressgut versorgen, wenn die Halmgutpresse dort steht und sich seitlich von der stationären Presse versorgt.

Ein solcher Schneckenförderer umfasst normalerweise eine innerhalb einer geschlossenen Rohrleitung rotierende Förderschnecke, mit der das Halmgut oder Pressgut aus einem Behälter zur stationär betreibbaren Presse befördert werden kann.

Wahlweise kann die Querfördereinrichtung außerhalb der Presse am Boden eines trichterförmigen Sammel- oder Schüttgutbehälters angeordnet sein und die Halmgutpresse daraus versorgen.

Der Schneckenförderer kann bspw. einen Durchmesser der Schnecke von 200 bis 300 mm aufweisen. Wahlweise kann die Förderschnecke des Schneckenförderers auch andere Dimensionen aufweisen, sofern dies im Einzelfall zweckmäßig ist.

Zur Erreichung eines Teils des oben genannten Ziels schlägt die vorliegende Erfindung weiterhin ein Verfahren zum Umrüsten einer mobilen landwirtschaftlichen Presse oder Halmgutpresse in eine universal einsetzbare stationäre Presse für Halmgut oder Pressgut aller Art mit den Merkmalen des unabhängigen Verfahrensanspruchs vor. Bei der landwirtschaftlichen Presse wird ein Querförderer in den Einzugsbereich einer rotierenden Messerkassette eingesetzt und der Querförderer von einem außerhalb der stationär betriebenen Halmgutpresse befindlichen Pressgutvorrat beschickt.

Die nachfolgenden Ausführungen fassen nochmal einige Aspekte der zuvor bereits in verschiedenen Ausführungsvarianten erläuterten Erfindung, d.h. der mobilen landwirtschaftlichen Presse, zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße mobile Presse oder Halmgutpresse vorrangig für den landwirtschaftlichen Einsatz verwendet werden und weist aus diesem Grund einen den typischen Materialfluss auf, wobei das Pressgut hierbei mehrere Förder- und Handhabungselemente durchläuft. Die erfindungsgemäße Presse oder Halmgutpresse kann wahlweise nach Entnahme eines Teils ihres Schneidmoduls als stationäre Presse eingesetzt werden, was ihre Besonderheit darstellt.

Die aus dem von der mobilen Presse aufgenommenen Halmgut oder aus dem der stationären Presse zugeführten Pressgut typischerweise geformten Rundballen können bspw. als zylindrische Ballen ausgegeben werden, was jedoch lediglich als beispielhafte Variante zu verstehen ist, denn grundsätzlich können nicht nur Rundballenpressen in der nachfolgend beschriebenen Weise als stationäre Pressen eingesetzt werden, sondern die erfindungsgemäße Umrüstung kommt grundsätzlich auch für andere Pressenbauarten in Frage.

Wahlweise kann die mobile Halmgutpresse eine frontseitige Zugdeichsel o. dgl. Zugverbindung aufweisen, so dass die Halmgutpresse ein gezogenes Fahrzeug ohne eigenen Antrieb bilden kann, das an einer geeigneten Anhängevorrichtung an einem Heckbereich einer landwirtschaftlichen Zugmaschine angehängt werden kann. Ein Fahrgestell der gezeigten mobilen Presse oder Halmgutpresse kann zudem typischerweise eine Zwillingsachse mit insgesamt vier relativ breit bereiften Stützrädern aufweisen, so dass auch schwerere Lasten auf dem Feld abgestützt werden können, ohne dass dabei unerwünscht hohe Bodenverdichtungseffekte entstehen.

Oberseitig auf dem Fahrgestell mit der Zwillingsachse kann sich ein Gehäuse der Presse befinden, in welchem aus dem vom Feld aufgenommenen Halmgut durch Wickeln die insbesondere heckseitig auszuwerfenden Ballen oder Rundballen geformt werden.

Unmittelbar hinter und unterhalb der Zugdeichsel und deutlich vor der Zwillingsachse mit den insgesamt vier Stützrädern kann sich zudem eine zum Boden reichende Aufnahmeeinrichtung befinden, die oftmals auch als Pick-Up bezeichnet wird, und die dem Aufnehmen von Erntegut oder des auf dem Feld liegenden Halmgutes dient. Mit dem hier allgemein verwendeten Begriff des Erntegutes oder von Halmgut sind insbesondere Ernterückstände von einem Mähdruschvorgang oder auch getrocknetes Heu nach einem Mähvorgang einer Wiese o. dgl. gemeint.

Damit die Aufnahmeeinrichtung mit einer darin befindlichen, um eine horizontale und quer zu einer Längsmittelachse der Halmgutpresse rotierenden und wahlweise angetriebenen Zinkenwalze oder Zuführwalze einen gleichbleibenden Abstand zum Boden einhalten kann, können wahlweise seitliche Stützräder an der Aufnahmeeinrichtung vorgesehen sein.

Der Materialfluss des bearbeiteten Pressgutes und die Fahrtrichtung der an der Zugdeichsel gezogenen mobilen Presse verlaufen entgegengesetzt. Demzufolge befindet sich zwischen dem Gehäuse, in dem die Ballen gewickelt werden, und der Aufnahmeeinrichtung in Förderrichtung des aufgenommenen Halmgutes das der Aufnahmeeinrichtung nachgeordnete Schneidmodul, das dem Zerkleinern des Erntegutes bzw. des mittels der Aufnahmeeinrichtung vom Feld aufgenommenen Halmgut dient. Vorzugsweise kann das Schneidmodul eine Messerkassette mit einer Vielzahl von dort befestigten oder gelagerten Schneidmessern sowie eine mit den Schneidmessern der Messerkassette in schneidendem Eingriff stehende rotierende Messerwalze umfassen.

Die Schneidmesser der Messerkassette können insbesondere motorisch verstellt werden, um die Eingriffstiefe gegenüber der rotierenden Messerwalze verstehen und um solchermaßen die Halmlänge des zu pressenden Halmgutes oder Erntegutes variieren zu können, so dass je nach Einstellung der Schneidmesser der Messerkassette unterschiedliche Halmlängen eingestellt und das aufgenommene Halmgut entsprechend geschnitten werden kann.

Der Messerwalze können in Richtung des Materialflusses wahlweise weitere rotierende Förderwalzen nachgeordnet sein, so bspw. eine zwischen Messerwalze und Gehäuse befindliche, unterhalb des Materialflusses für das geförderte Halmgut angeordnete weitere rotierende Förderwalze sowie ggf. weitere, hier nicht erwähnte Förderelemente.

Die Messerkassette kann sich wahlweise schräg oberhalb der rotierenden Messerwalze befinden, so dass die einzelnen Schneidmesser der Messerkassette von oben zwischen die voneinander beabstandeten Scheiben der Messerwalze hineingreifen. Eine solche Konfiguration ist jedoch nicht zwingend, denn es gibt auch Varianten, bei denen die Messerkassette in tieferem Niveau angeordnet ist und leicht versetzt unterhalb der rotierenden Messerkassette montiert sein kann. Die grundsätzliche Wirkungsweise der miteinander in Eingriff stehenden Schneidmesser und scheibenförmigen Messern der rotierenden Messerwalze ändert sich hierdurch nicht, auch wenn der Materialfluss etwas anders verläuft als hier beschrieben.

Außerdem umfasst die Halmgutpresse eine dem Schneidmodul sowie der weiteren Förderwalze nachgeordnete Press- und/oder Wickeleinrichtung, die sich innerhalb des Gehäuses befindet und deshalb hier nicht näher ausgeführt ist. Die Press- und/oder Wickeleinrichtung dient dem Wickeln und ggf. dem Verdichten oder Pressen des aufgenommenen und in Materialflussrichtung durch die Maschine beförderten Erntegutes oder Halmgutes zu Ballen definierter Größe, wobei der Press- und/oder Wickeleinrichtung außerdem eine Bindeeinrichtung zugeordnet sein kann, die wahlweise ein geeignetes Garn um einen fertig gewickelten Ballen oder Rundballen wickeln und dieses Garn anschließend verknoten kann.

Die fertig gewickelten Ballen werden normalerweise heckseitig aus dem Gehäuse ausgeworfen oder können dort herausrollen, ggf. nach Öffnen einer heckseitigen Klappe, die nach jedem Auswerfen eines fertig gewickelten Ballens vorzugsweise wieder verschlossen wird.

Eine solche Halmgutpresse, wie sie hier beschrieben wurde, kann nach ihrem Umbau als stationäre Presse verwendet werden und weist hierbei ebenfalls einen sehr ähnlichen Materialfluss auf. Eine entsprechend modifizierbare mobile Presse kann somit nach Entnahme eines Teils ihres Schneidmoduls als stationäre Presse verwendet werden.

So kann die Messerkassette wahlweise als Ganzes seitlich aus der Halmgutpresse herausgenommen werden, bspw. mittels einer hierfür vorgesehenen Schlittenführung o. dgl., die eine motorisch unterstützte Entnahme der Messerkassette ermöglichen kann. Die Zugdeichsel ist bei stationärem Einsatz der Presse ebenso funktionslos wie die Aufnahmeeinrichtung, die nun kein Halmgut mehr vom Boden aufnimmt.

Das zu verarbeitende Gut oder Pressgut wird im stationären Betrieb der Presse von außen zugeführt und mittels einer anstelle der Messerkassette an deren Einbauposition eingesetzten Querfördereinrichtung dem insoweit modifizierten Schneidmodul zugeführt. Die Querfördereinrichtung kann bspw. eine Förderschnecke aufweisen, die vorzugsweise über die gesamte Breite der rotierenden Messerwalze offen ist und dieser somit das in die stationäre Presse hineingeförderte Pressgut zuteilt, so dass die rotierende Messerwalze als kombinierte Zerkleinerungs- und/oder Fördereinrichtung fungiert und das beförderte und ggf. zerkleinerte Pressgut über die weitere Förderwalze entlang des Materialflusses dem Gehäuse mit der darin befindlichen Press- und/oder Wickeleinrichtung zufördert.

Von dort können die Ballen oder Rundballen, die aus dem Pressgut geformt wurden, heckseitig ausgegeben oder ausgeworfen werden.

Wahlweise kann die Querfördereinrichtung an einer aus der Presse ragenden und ggf. von dieser entsprechend der gewählten Länge der Querfördereinrichtung distanzierten Mündung mit einem Trichter oder einem größeren Aufnahmebehälter o. dgl. versehen sein, so dass größere Portionen an Pressgut dort hineingegeben und mittels der bspw. als Förderschnecke ausgebildeten Querfördereinrichtung in die Presse hinein und zur rotierenden Messerwalze befördert werden können.

Entsprechend der Anordnung der Messerkassette sich auch die stattdessen dort einsetzbare Querfördereinrichtung schräg oberhalb der rotierenden Messerwalze befinden, so dass das Pressgut unmittelbar von der rotierenden Messerwalze übernommen und in Richtung des Materialflusses weiterbefördert werden kann.

Die aus dem Pressgut geformten und fertig gewickelten Ballen werden wiederum heckseitig aus dem Gehäuse ausgeworfen oder können dort herausrollen, insbesondere nach Öffnen einer heckseitigen Klappe, die nach jedem Auswerfen eines fertig gewickelten Ballens wieder verschlossen werden kann.

Als Pressgut kommen die unterschiedlichsten Wertstoffe in Frage, die im Zusammenhang mit landwirtschaftlicher und/oder forstwirtschaftlicher Tätigkeit anfallen können. Neben dem häufig verarbeiteten Maishäckselgut kann das Pressgut bspw. auch durch forstwirtschaftliche Abfälle wie Holzschnitzel gebildet sein, das einen wertvollen Rohstoff zur weiteren energetischen oder stofflichen Nutzung darstellen kann. Das Pressgut kann jedoch bspw. auch durch Rückstände einer Obst- oder Gemüseverarbeitung, durch Blattreste, Obstschalen etc. gebildet sein. Auch hierfür kann die stationäre Presse vorteilhaft eingesetzt werden.

Die Förderschnecke, welche die anstelle der Messerkassette in die Presse eingesetzte Querfördereinrichtung bilden kann, kann wahlweise mit einem endseitig der Schnecke montierten Sammel- oder Schüttgutbehälters mit insbesondere trichterförmigen Wänden kombiniert werden, durch den größere Portionen von zu pressendem Gut nahezu beliebiger Art der Förderschnecke zugeteilt werden können, so dass diese das Gut kontinuierlich in die Presse hineinfördern kann.

Die Förderschnecke kann wahlweise abgewinkelt sein, um das zu pressende Gut von einem bodennahen Bereich unterhalb des Trichters fördern zu können.

Unterseitig an einem solchen rechteckförmigen Trichter bzw. am rechteckförmigen Sammel- oder Schüttgutbehälter kann sich die motorisch angetriebene Förderschnecke befinden, die über einen Anschlussflansch mit längeren Verbindungsabschnitten gekoppelt werden kann, so dass wahlweise unterschiedliche Distanzen zwischen dem Aufstellort des Trichters oder des Sammel- oder Schüttgutbehälters und dem Aufstellort der stationären Presse überbrückt werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A verdeutlicht in schematischer Seitenansicht den typischen Materialfluss durch eine landwirtschaftliche Halmgutpresse.
Fig. 1B verdeutlicht den typischen Materialfluss durch eine Halmgutpresse gemäß Fig. 1A, die nach Entnahme eines Schneidmoduls als stationäre Presse verwendet wird.
Fig. 2A zeigt eine Detailansicht eines Schneidmoduls, hier umfassend eine Messerkassette und eine damit im Eingriff stehende rotierende Messerwalzte.
Fig. 2B zeigt eine Detailansicht eines modifizierten Schneidmoduls, bei dem die Messerkassette entnommen wurde und durch eine Querfördereinrichtung ersetzt ist.
Fig. 3A zeigt eine perspektivische Ansicht einer stationär betreibbaren landwirtschaftlichen Presse, die mit einer Querfördereinrichtung in Gestalt einer zwischen einem Schüttgutbehälter und der Presse angeordneten Förderschnecke ausgestattet ist.
Fig. 3B zeigt eine perspektivische Ansicht einer Ausführungsvariante eines trichterförmigen Schüttgutbehälters, an dessen Boden die zur stationär betreibbaren Presse führende Förderschnecke angeordnet ist.

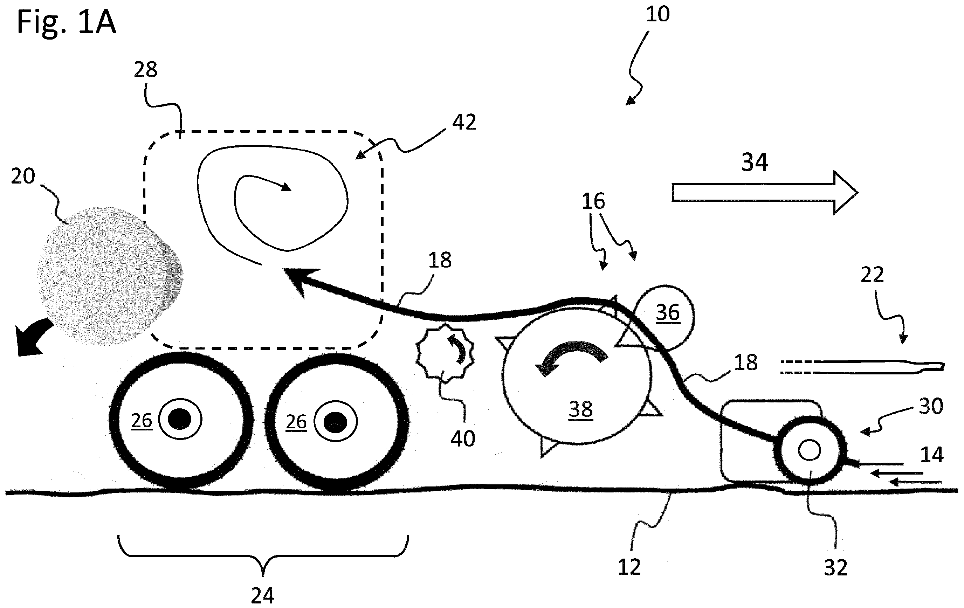

Für gleiche oder gleich wirkende Elemente der Erfindung werden in den Figuren 1A bis 3B in der Regel jeweils identische Bezugszeichen verwendet. Ferner sind der besseren Übersichtlichkeit halber teilweise nur solche Bezugszeichen in den einzelnen Figuren dargestellt, wenn sie für die Beschreibung der jeweiligen Figur sinnvoll oder erforderlich sind. Die dargestellten Ausführungsformen stellen lediglich Beispiele dar, wie die erfindungsgemäße Pressvorrichtung oder das erfindungsgemäße Verfahren ausgestaltet sein können und stellen keine abschließende Begrenzung dar. Auch sind die nachfolgend beschriebenen Merkmale jeweils nicht in engem Zusammenhang mit weiteren Merkmalen des jeweiligen Ausführungsbeispiels zu verstehen, sondern können jeweils im allgemeinen Zusammenhang vorgesehen sein bzw. hierfür Verwendung finden.

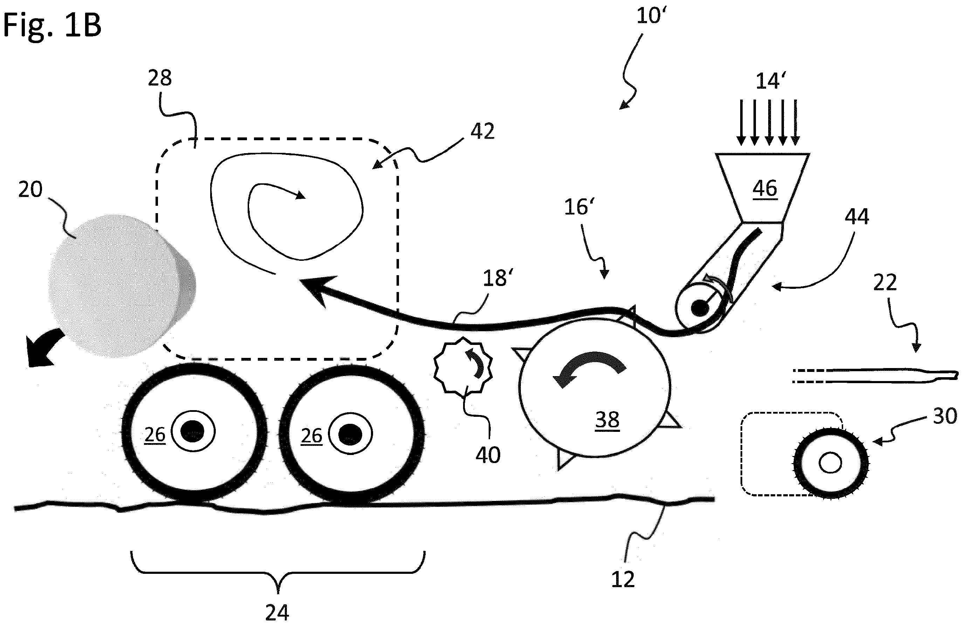

Die beiden schematischen Seitenansichten der Figuren 1A und 1B verdeutlichen den typischen Materialfluss durch eine mobile landwirtschaftliche Presse oder Halmgutpresse 10 mit ihren wichtigsten Förder- und Handhabungselementen, wobei die Fig. 1A den üblichen Aufbau einer zur Aufnahme von auf dem Feld 12 liegenden Halmgut 14 vorgesehenen ist, während die Fig. 1B den typischen Materialfluss durch eine solche Halmgutpresse 10 gemäß Fig. 1A verdeutlicht, die nach Entnahme eines Teils ihres Schneidmoduls 16 als stationäre Presse 10` eingesetzt werden kann.

In beiden Figuren 1A und 1B ist jeweils der Materialfluss 18 bzw. 18' für das Halmgut 14 (Fig. 1A) oder das Pressgut 14' durch die Halmgutpresse 10 bzw. 10' kenntlich gemacht. Die Halmgutpresse 10 und 10' selbst ist dort jeweils durch einen einfachen Kasten angedeutet, um den Materialfluss 18 bzw. 18' und die für das Pressen des Halmguts 14 bzw. des Pressguts 14' verdeutlichen zu können.

Die aus dem von der mobilen Presse 10 aufgenommenen Halmgut 14 oder aus dem der stationären Presse 10` zugeführten Pressgut 14' geformten Rundballen 20 sind in der Fig. 1A und in der Fig. 1B jeweils als zylindrische Ballen 20 verdeutlicht, was als beispielhafte Variante zu verstehen ist, denn grundsätzlich können nicht nur Rundballenpressen in der nachfolgend beschriebenen Weise als stationäre Pressen 10` eingesetzt werden, sondern die erfindungsgemäße Umrüstung kommt grundsätzlich auch für andere Pressenbauarten in Frage.

Da dem Fachmann der grundsätzliche Aufbau und der Materialfluss durch eine solche mobile landwirtschaftliche Presse 10 vertraut ist, kann sich die nachfolgende Beschreibung auf die wesentlichen Aspekte der Erfindung beschränken. Hinsichtlich des Aufbaus und der Funktionsweise einer mobilen landwirtschaftlichen Presse kann beispielhaft auf die Offenbarung der EP 3 981 245 A1 verwiesen werden, die allerdings keine Rundballenpresse, sondern eine mobile Halmgutpresse zum Pressen von quaderförmigen Ballen zeigt.

Wahlweise kann die mobile Halmgutpresse 10 gemäß Fig. 1A eine hier lediglich schematisch angedeutete frontseitige Zugdeichsel 22 aufweisen, so dass die Halmgutpresse 10 ein gezogenes Fahrzeug ohne eigenen Antrieb bilden kann, das an einer geeigneten Anhängevorrichtung an einem Heckbereich einer landwirtschaftlichen Zugmaschine (hier nicht gezeigt) angehängt werden kann. Ein Fahrgestell der gezeigten mobilen Presse 10 oder Halmgutpresse 10 weist eine Zwillingsachse 24 mit insgesamt vier relativ breit bereiften Stützrädern 26 auf, so dass auch schwerere Lasten auf dem Feld 12 abgestützt werden können, ohne dass dabei unerwünscht hohe Bodenverdichtungseffekte entstehen.

Oberseitig auf dem Fahrgestell mit der Zwillingsachse 24 befindet sich ein Gehäuse 28 der Presse 10, in welchem aus dem vom Feld 12 aufgenommenen Halmgut 14 durch Wickeln die heckseitig auszuwerfenden Ballen oder Rundballen 20 geformt werden.

Unmittelbar hinter und unterhalb der Zugdeichsel 22 und deutlich vor der Zwillingsachse 24 mit den insgesamt vier Stützrädern 26 befindet sich eine zum Boden 12 reichende Aufnahmeeinrichtung 30, die oftmals auch als Pick-Up bezeichnet wird, und die dem Aufnehmen von Erntegut oder des auf dem Feld 12 liegenden Halmgutes 14 dient. Mit dem hier allgemein verwendeten Begriff des Erntegutes oder von Halmgut 12 sind insbesondere Ernterückstände von einem Mähdruschvorgang oder auch getrocknetes Heu nach einem Mähvorgang einer Wiese o. dgl. gemeint.

Damit die Aufnahmeeinrichtung 30 mit einer darin befindlichen, um eine horizontale und quer zu einer Längsmittelachse (nicht dargestellt) der Halmgutpresse 10 rotierenden und wahlweise angetriebenen Zinkenwalze oder Zuführwalze 32 einen gleichbleibenden Abstand zum Boden einhalten kann, können wahlweise seitliche Stützräder an der Aufnahmeeinrichtung 30 vorgesehen sein, die allerdings in Fig. 1A nicht dargestellt sind.

Der gesamte Materialfluss 18 durch die mobile Halmgutpresse 10 ist in Fig. 1A durch einen Pfeil angedeutet, der von vorne (rechts) nach hinten (links) durch die gesamte Maschine verläuft. Die durch einen horizontalen Pfeil kenntlich gemachte Fahrtrichtung 34 verläuft in der Darstellung der Fig. 1A von links nach rechts. Der Materialfluss 18 (in Fig. 1A von rechts nach links) und die Fahrtrichtung 34 (in Fig. 1A von links nach rechts) der an der Zugdeichsel 22 gezogenen mobilen Presse 10 verlaufen entgegengesetzt.

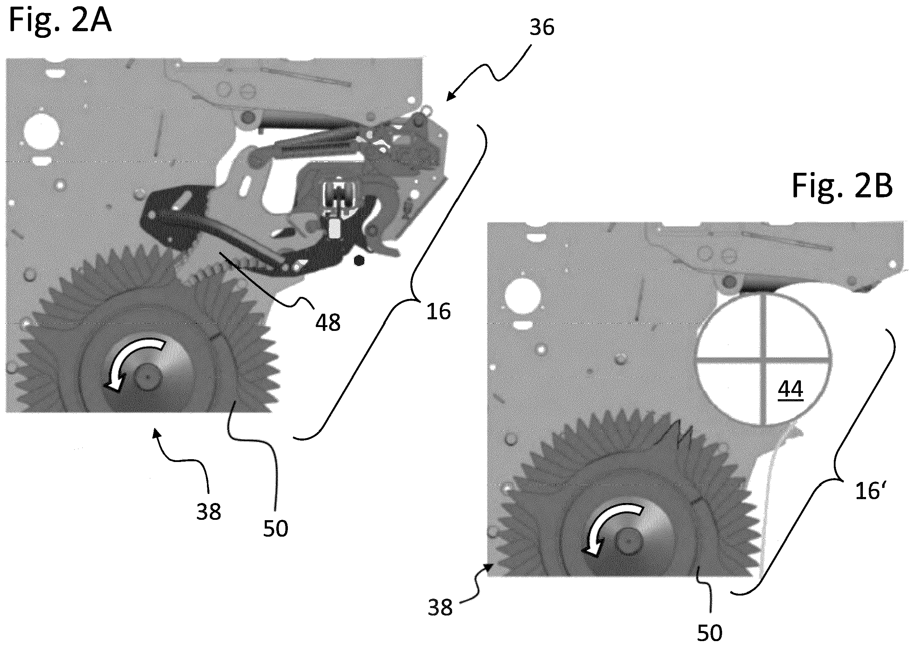

Demzufolge befindet sich zwischen dem Gehäuse 28, in dem die Ballen 20 gewickelt werden, und der Aufnahmeeinrichtung 30 in Förderrichtung des aufgenommenen Halmgutes 14 das der Aufnahmeeinrichtung 30 nachgeordnete Schneidmodul 16, das dem Zerkleinern des Erntegutes bzw. des mittels der Aufnahmeeinrichtung 30 vom Feld 12 aufgenommenen Halmgut 14 dient. Vorzugsweise kann das Schneidmodul 16 eine hier nicht näher ausgeführte, sondern zeichnerisch lediglich angedeutete Messerkassette 36 mit einer Vielzahl von dort befestigten oder gelagerten Schneidmessern sowie eine mit den Schneidmessern der Messerkassette in schneidendem Eingriff stehende rotierende Messerwalze 38 umfassen (vgl. hierzu die Fig. 2A).

Die Schneidmesser der Messerkassette 36 können insbesondere motorisch verstellt werden, um die Eingriffstiefe gegenüber der rotierenden Messerwalze 38 verstellen und um solchermaßen die Halmlänge des zu pressenden Halmgutes 14 oder Erntegutes variieren zu können, so dass je nach Einstellung der Schneidmesser der Messerkassette 36 unterschiedliche Halmlängen eingestellt und das aufgenommene Halmgut 14 entsprechend geschnitten werden kann. Die schematische Darstellung der Fig. 2A kann diese Verstellbarkeit besser verdeutlichen.

Der Messerwalze 38 können in Richtung des Materialflusses 18 weitere rotierende Förderwalzen 40 nachgeordnet sein, was in der schematischen Darstellung der Figuren 1A und 1B durch eine zwischen Messerwalze 38 und Gehäuse 28 befindliche, unterhalb des Materialflusses 18 für das geförderte Halmgut 18 angeordnete weitere rotierende Förderwalze 40 verdeutlicht ist.

Die Darstellungen der Figuren 1A und 1B verdeutlichen eine Ausführungsvariante einer Halmgutpresse 10, bei welcher sich die Messerkassette 36 schräg oberhalb der rotierenden Messerwalze 38 befindet, so dass die einzelnen Schneidmesser der Messerkassette 36 von oben zwischen die voneinander beabstandeten Scheiben der Messerwalze 38 hineingreifen. Eine solche Konfiguration ist jedoch nicht zwingend, denn es gibt auch Varianten, bei denen die Messerkassette in tieferem Niveau angeordnet ist und leicht versetzt unterhalb der rotierenden Messerkassette montiert sein kann. Die grundsätzliche Wirkungsweise der miteinander in Eingriff stehenden Schneidmesser und scheibenförmigen Messern der rotierenden Messerwalze ändert sich hierdurch nicht, auch wenn der Materialfluss etwas anders verläuft als hier in der Fig. 1A beispielhaft verdeutlicht.

Außerdem umfasst die Halmgutpresse 10 eine dem Schneidmodul 16 sowie der weiteren Förderwalze 40 nachgeordnete Press- und/oder Wickeleinrichtung 42, die sich innerhalb des Gehäuses 28 befindet und deshalb hier nicht näher ausgeführt ist. Die Press- und/oder Wickeleinrichtung 42 dient dem Wickeln und ggf. dem Verdichten oder Pressen des aufgenommenen und in Materialflussrichtung 18 durch die Maschine 10 beförderten Erntegutes oder Halmgutes 14 zu Ballen 20 definierter Größe, wobei der Press- und/oder Wickeleinrichtung 42 außerdem eine Bindeeinrichtung (hier ebenfalls nicht dargestellt) zugeordnet sein kann, die wahlweise ein geeignetes Garn um einen fertig gewickelten Ballen 20 oder Rundballen 20 wickeln und verknoten kann.

Die fertig gewickelten Ballen 20 werden normalerweise heckseitig aus dem Gehäuse 28 ausgeworfen oder können dort herausrollen, ggf. nach Öffnen einer heckseitigen Klappe (hier nicht gezeigt), die nach jedem Auswerfen eines fertig gewickelten Ballens 20 vorzugsweise wieder verschlossen wird.

Die schematische Seitenansicht der Fig. 1B verdeutlicht schließlich den typischen Materialfluss durch eine modifizierte Halmgutpresse, die nach ihrem Umbau als stationäre Presse 10` verwendet wird.

Die schematische Seitenansicht der Fig. 1B verdeutlicht dagegen einen Materialfluss 18' durch eine stationär betriebene landwirtschaftliche Presse 10` mit im Wesentlichen denselben Förder- und Handhabungselementen, die anhand der Fig. 1A bereits verdeutlicht wurden, wobei nachfolgend die notwendigen Modifikationen beschrieben werden, um die dort gezeigte mobile Presse 10 nach Entnahme eines Teils ihres Schneidmoduls 16 als stationäre Presse 10` verwenden zu können.

Die Messerkassette 36 kann vorzugsweise als Ganzes seitlich aus der Halmgutpresse 10 herausgenommen werden, bspw. mittels einer hierfür vorgesehenen Schlittenführung o. dgl., die eine motorisch unterstützte Entnahme der Messerkassette 36 ermöglichen kann. Die Zugdeichsel 22 ist bei stationärem Einsatz der Presse 10' ebenso funktionslos wie die Aufnahmeeinrichtung 30, die nun kein Halmgut mehr vom Boden 12 aufnimmt.

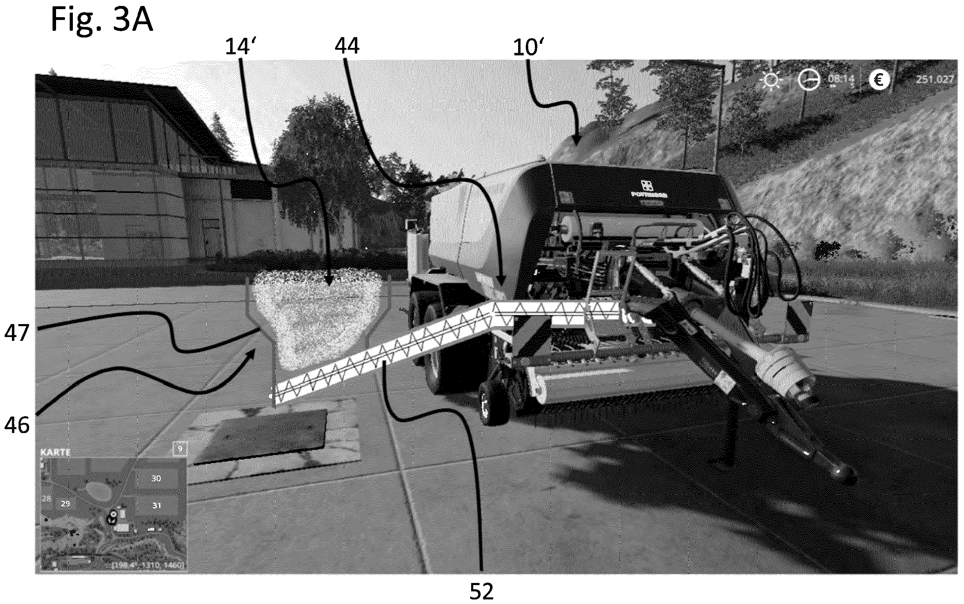

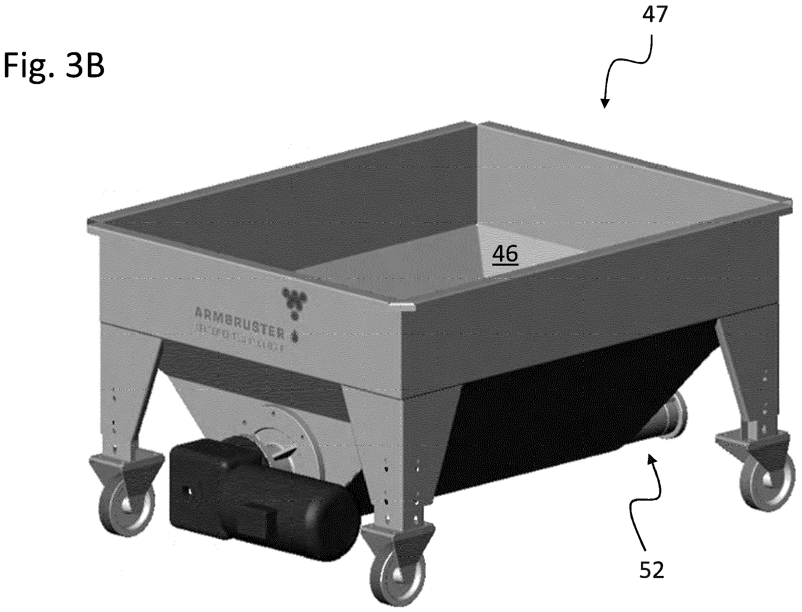

Das zu verarbeitende Gut oder Pressgut 14' wird nun von außen zugeführt und mittels einer anstelle der Messerkassette 36 an deren Einbauposition eingesetzten Querfördereinrichtung 44 dem insoweit modifizierten Schneidmodul 16` zugeführt. Wie dies anhand der Figuren 3A und 3B beispielhaft verdeutlich ist, kann die Querfördereinrichtung 44 eine Förderschnecke aufweisen, die vorzugsweise über die gesamte Breite der rotierenden Messerwalze 38 offen ist und dieser somit das in die stationäre Presse 10' hineingeförderte Pressgut 14' zuteilt, so dass die rotierende Messerwalze 38 als kombinierte Zerkleinerungs- und/oder Fördereinrichtung fungiert und das beförderte und ggf. zerkleinerte Pressgut 14' über die weitere Förderwalze 40 entlang des gezeigten Materialflusses 18' dem Gehäuse 28 mit der darin befindlichen Press- und/oder Wickeleinrichtung 42 zufördert.

Von dort können die Ballen oder Rundballen 20, die aus dem Pressgut 14' geformt wurden, heckseitig ausgegeben oder ausgeworfen werden.

Wahlweise kann die Querfördereinrichtung 44 an einer aus der Presse 10' ragenden und ggf. von dieser entsprechend der gewählten Länge der Querfördereinrichtung 44 distanzierten Mündung mit einem Trichter 46 oder einem größeren Aufnahmebehälter o. dgl. (vgl. hierzu die Figuren 3A und 3B) versehen sein, so dass größere Portionen an Pressgut 14' dort hineingegeben und mittels der bspw. als Förderschnecke ausgebildeten Querfördereinrichtung 44 in die Presse 10' hinein und zur rotierenden Messerwalze 38 befördert werden können.

Der geänderte Materialfluss 18' durch die stationär betriebene Presse 10' ist in Fig. 1B durch den Pfeil angedeutet, der von vorne (rechts) durch die Querfördereinrichtung 44 zur Messerwalze 38 und über die weitere Förderwalze 40 nach hinten (links) zum Gehäuse 28 mit der darin befindlichen Press-/Wickeleinrichtung 42 verläuft.

Entsprechend der Anordnung der Messerkassette 36 gemäß Fig. 1A befindet sich auch die stattdessen dort einsetzbare Querfördereinrichtung 44 schräg oberhalb der rotierenden Messerwalze 38, so dass das Pressgut 14' unmittelbar von der rotierenden Messerwalze 38 übernommen und in Richtung des Materialflusses 18' weiterbefördert werden kann.

Die aus dem Pressgut 14' geformten und fertig gewickelten Ballen 20 werden wiederum heckseitig aus dem Gehäuse 28 ausgeworfen oder können dort herausrollen, insbesondere nach Öffnen einer heckseitigen Klappe (hier nicht gezeigt), die nach jedem Auswerfen eines fertig gewickelten Ballens 20 wieder verschlossen werden kann.

Als Pressgut 14' kommen die unterschiedlichsten Wertstoffe in Frage, die im Zusammenhang mit landwirtschaftlicher und/oder forstwirtschaftlicher Tätigkeit anfallen können. Neben dem häufig verarbeiteten Maishäckselgut kann das Pressgut 14' bspw. auch durch forstwirtschaftliche Abfälle wie Holzschnitzel gebildet sein, das einen wertvollen Rohstoff zur weiteren energetischen oder stofflichen Nutzung darstellen kann. Das Pressgut 14' kann jedoch bspw. auch durch Rückstände einer Obst- oder Gemüseverarbeitung, durch Blattreste, Obstschalen etc. gebildet sein. Auch hierfür kann die stationäre Presse 10` vorteilhaft eingesetzt werden.

Die Fig. 2A zeigt in einer schematischen Detailansicht die zusammenwirkenden Komponenten des Schneidmoduls 16 der mobilen Presse 10 gemäß Fig. 1A. Die Messerkassette 36 umfasst eine Vielzahl von verstellbaren Schneidmessern 48, die mit der rotierenden Messerwalze 38 in Eingriff stehen und jeweils zwischen deren benachbarten rotierenden Messerscheiben 50 hineingreifen. Der Verstellmechanismus, der die Schneidmesser 48 der Messerkassette 36 vorzugsweise gemeinsam verstellt, kann elektromotorisch, hydraulisch oder auf andere Weise arbeiten.

Die Fig. 2B zeigt in einer schematischen Detailansicht die zusammenwirkenden Komponenten des durch Entnahme der Messerkassette 36 modifizierten Schneidmoduls 16` der stationär betriebenen Presse 10` gemäß Fig. 1B. An den Einbauort der Messerkassette 36 ist dort die Querfördereinrichtung 44 eingesetzt, bspw. gebildet durch eine Förderschnecke oder eine andere geeignete Fördereinrichtung zur Zuführung des zu pressenden Gutes 14' in das Schneidmodul 16`.

Die Fig. 3A zeigt eine perspektivische Darstellung auf eine stationär eingesetzte landwirtschaftliche Presse 10' von schräg vorne. Die hier gezeigte Konfiguration einer Förderschnecke 52, welche die anstelle der Messerkassette 36 in die Presse 10' eingesetzte Querfördereinrichtung 44 bildet, verdeutlicht zudem die endseitige Montagemöglichkeit des schematisch angedeuteten Sammel- oder Schüttgutbehälters 47 mit trichterförmigen Wänden, durch den größere Portionen von zu pressendem Gut 14' nahezu beliebiger Art der Förderschnecke 52 zugeteilt werden können, so dass diese kontinuierlich in die Presse 10' hineinfördern kann.

Die Förderschnecke 52 kann wahlweise in der gezeigten Weise abgewinkelt sein, um das zu pressende Gut 14' von einem bodennahen Bereich unterhalb des Trichters 46 fördern zu können.

Ein Ausführungsbeispiel eines solchen Sammel- oder Schüttgutbehälters 47 mit oben offenem Aufnahmetrichter 46 ist zudem in Fig. 3B verdeutlicht. Unterseitig am rechteckförmigen Trichter 46 bzw. am rechteckförmigen Sammel- oder Schüttgutbehälter 47 befindet sich die motorisch angetriebene Förderschnecke 52, die über einen Anschlussflansch mit längeren Verbindungsabschnitten gekoppelt werden kann, so dass wahlweise unterschiedliche Distanzen zwischen dem Aufstellort des Trichters 46 oder des Sammel- oder Schüttgutbehälters 47 und dem Aufstellort der stationären Presse 10` überbrückt werden können.

Folgendes sei als ergänzender Hinweis zu den vorstehenden Ausführungen gegeben. Wenn auch im Zusammenhang mit den in den Figuren gezeigten Ausführungsvarianten und deren vorstehenden Beschreibungen oftmals oder auch generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen von Teilen der mobilen Halmgutpresse 10, deren Einzelheiten oder anderer gezeichneter Elemente in irgendeiner Weise in seinem Verständnis beeinträchtigt wäre. Die Figuren ermöglichen es dem Fachmann als Leser vielmehr, anhand der konkreter erläuterten Umsetzungen der Anwendungsmöglichkeiten und des konkreter erläuterten Aufbaus der erfindungsgemäßen Presse 10 ein besseres Verständnis für den in den Ansprüchen sowie im allgemeinen Teil der Beschreibung zumindest hinsichtlich einiger Aspekte allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: mobile Halmgutpresse, mobile landwirtschaftliche Halmgutpresse, mobile Ballenpresse, mobile Großballenpresse
- 10': stationäre Presse, stationär eingesetzte landwirtschaftliche Presse
- 12: Feld, Boden
- 14: Halmgut, Erntegut
- 14': Pressgut, zu pressendes Gut
- 16: Schneidmodul
- 16': modifiziertes Schneidmodul
- 18: Materialfluss (durch die mobile Presse), Materialflussrichtung
- 18': Materialfluss (durch die stationäre Presse), Materialflussrichtung
- 20: Ballen, Rundballen
- 22: Zugdeichsel
- 24: Zwillingsachse
- 26: Stützrad, Stützräder
- 28: Gehäuse
- 30: Aufnahmeeinrichtung, Pick-Up
- 32: Zinkenwalze, Zuführwalze
- 34: Fahrtrichtung
- 36: Messerkassette
- 38: rotierende Messerwalze
- 40: weitere Förderwalze
- 42: Presseinrichtung, Wickeleinrichtung, Press- und/oder Wickeleinrichtung
- 44: Querfördereinrichtung
- 46: Trichter
- 47: Sammelbehälter, Schüttgutbehälter, Sammel- und/oder Schüttgutbehälter
- 48: Schneidmesser
- 50: Messerscheiben
- 52: Förderschnecke

## Patentansprüche

1. Mobile landwirtschaftliche Presse (10, 10`) oder Halmgutpresse zum Pressen von insbesondere Rundballen (20), mit einer Aufnahmeeinrichtung (30) zum Aufnehmen von Erntegut (14), mit einem der Aufnahmeeinrichtung (30) in Förderrichtung des Erntegutes (14) nachgeordneten Schneidmodul (16) zum Fördern und Zerkleinern des Erntegutes (14), mit einer dem Schneidmodul (16) nachgeordneten Press- und/oder Wickeleinrichtung (42) zum Pressen und/oder Wickeln des Erntegutes (14) zu insbesondere annähernd zylindrischen Ballen (20) definierter Größe,
- wobei das Schneidmodul (16) zumindest eine rotierende Messerwalze (38) umfasst, die mit einer Vielzahl von feststehenden oder in ihrer Lage veränderlichen Schneidmessern (48) in schneidendem Eingriff steht,
- wobei der Messerwalze (38) eine Querfördereinrichtung (44) zur Zuförderung von Halmgut (14) oder Pressgut (14`) zur Messerwalze (38) zuordenbar ist,
- und wobei Teile des Schneidmoduls (16) aus der Presse (10) oder Halmgutpresse entnehmbar und durch die Querfördereinrichtung (44) ersetzbar sind.

2. Landwirtschaftliche Presse (10, 10`) oder Halmgutpresse nach Anspruch 1, bei der das Schneidmodul (16) wenigstens eine modular zusammengefasste Messerkassette (36) mit einer Vielzahl von dort befestigten oder gelagerten Schneidmessern (48) umfasst, mit der/denen die rotierenden Messerwalze (38) in schneidendem Eingriff steht.

3. Landwirtschaftliche Presse (10, 10`) nach Anspruch 2, bei der die modular zusammengefasste Messerkassette (36) mit der Vielzahl an Schneidmessern (48) aus der Halmgutpresse (10) entnehmbar und durch die Querfördereinrichtung (44) zur Zuförderung von Halmgut (14) oder Pressgut (14`) zur rotierenden Messerwalze (38) ersetzbar ist.

4. Landwirtschaftliche Presse (10, 10`) nach einem der Ansprüche 1 bis 3, die nach dem Einsetzen und durch das Einsetzen der Querfördereinrichtung (44) in den Förderbereich der Messerwalze (38) eine stationäre Pressvorrichtung (10`) für Pressgut (14`) unterschiedlicher Art, Konsistenz und/oder Zusammensetzung bildet.

5. Landwirtschaftliche Presse (10, 10`) nach einem der Ansprüche 1 bis 4, bei der die Messerwalze (38) unterhalb der Messerkassette (36) und damit unterhalb der anstelle der Messerkassette (36) einsetzbaren Querfördereinrichtung (44) angeordnet ist.

6. Landwirtschaftliche Presse (10, 10`) nach einem der Ansprüche 1 bis 5, bei der die Querfördereinrichtung (44) durch einen Schneckenförderer oder eine Förderschnecke (52) gebildet ist.

7. Landwirtschaftliche Presse (10, 10`) nach Anspruch 6, bei welcher der Schneckenförderer oder die Förderschnecke (52) im Wesentlichen durch die gesamte Maschinenbreite reicht und die als Längsförderer wirkende rotierende Messerwalze (38) mit Pressgut (14`) versorgt.

8. Landwirtschaftliche Presse (10, 10`) nach einem der Ansprüche 1 bis 7, bei welcher die Querfördereinrichtung (44) die stationär betreibbare Halmgutpresse (10`) mit außerhalb, insbesondere quer zu einer Längsrichtung befindlichem Pressgut (14`) versorgt.

9. Landwirtschaftliche Presse (10, 10`) nach Anspruch 8, bei welcher die Querfördereinrichtung (44) außerhalb der stationär betreibbaren Presse (10`) am Boden eines trichterförmigen Sammel- oder Schüttgutbehälters (47) angeordnet ist und die Halmgutpresse (10`) daraus versorgt.

10. Verfahren zum Umrüsten einer mobilen landwirtschaftlichen Presse (10) oder Halmgutpresse in eine universal einsetzbare stationäre Presse (10`) für Halmgut (14) oder Pressgut (14`) aller Art, bei der eine Querfördereinrichtung (44) in den Einzugsbereich einer rotierenden Messerwalze (38) eingesetzt und die Querfördereinrichtung (44) von einem außerhalb der stationär betriebenen Halmgutpresse (10`) befindlichen Pressgutvorrat beschickt wird.

11. Verfahren nach Anspruch 10 zum Umrüsten einer mobilen landwirtschaftlichen Presse (10) oder Halmgutpresse gemäß einem der Ansprüche 1 bis 9 und zu deren Verwendung als universell einsetzbare stationäre Presse (10`) für Halmgut (14) oder Pressgut (14`) aller Art.
